# EUROPÄISCHE PATENTANMELDUNG

(11) **EP 1 159 999 A1**
(43) Veröffentlichungstag der Anmeldung: **05.12.2001**
(21) Anmeldenummer: 00810678.3
(22) Anmeldetag: 28.07.2000
(51) Int. Cl.: B01D 53/22, B01D 19/00

(54) **Verfahren und Vorrichtung zur Rückgewinnung von Stickstoff bei der Herstellung von Polyethylen**

(30) Priorität: 31.05.2000 EP 00810483
(71) Anmelder: Riatti, Alberto, 61381 Friedrichsdorf (DE)
(72) Erfinder: Riatti, Alberto, 61381 Friedrichsdorf (DE)
(74) Vertreter: Graf, Werner

(57) **Zusammenfassung**

Das Verfahren zur Rückgewinnung von Stickstoff bei der Herstellung von Polyethylen erfolgt,
- indem in einer Stripping-Kolonne (2) das nicht polymerisierte Ethylen unter Verwendung von Stickstoff vom Polyethylen getrennt wird,
- indem ein Gasgemisch umfassend Ethylen und Stickstoff von der Stripping-Kolonne (2) abgezogen und einer Membran (4a) zugeführt wird, welche derart ausgestaltet ist, dass das Ethylen zumindest teilweise vom Stickstoff abtrennt wird,
- indem der mit Ethylen abgereicherte Stickstoff gefiltert und danach zurückgewonnen wird,
- und indem das Ethylen mit einem Vakuumpumpsystem (6) von der Membran (4a) abgezogen wird.

## Beschreibung

Die Erfindung betrifft ein Verfahren zur Rückgewinnung von Stickstoff bei der Herstellung von Polyethylen gemäss dem Oberbegriff von Anspruch 1. Die Erfindung betrifft weiter eine Vorrichtung zur Rückgewinnung von Stickstoff bei der Herstellung von Polyethylen gemäss dem Oberbegriff von Anspruch 7.

Polyethylen wird durch Polymerisation von Ethylen hergestellt. Nach dem Herstellen von Polyethylen muss dieses einem Reinigungsprozess unterzogen werden. Rohes Polyethylen enthält einen signifikanten Anteil an nicht reagierten Kohlenwassenstoffen. Bevor das rohe Polyethylen extrudiert wird, müssen die nicht reagierten Kohlenwasserstoffe entzogen werden. Diese Kohlenwasserstoffe werden in einer Stripping-Kolonne unter Verwendung von Stickstoff abgezogen. Üblicherweise werden die abgezogenen Kohlenwasserstoffe zusammen mit dem Stickstoff über einen Flare an die Umwelt abgegeben.

Es ist Aufgabe der vorliegenden Erfindung ein wirtschaftlich vorteilhafteres Verfahren bzw. eine entsprechende Vorrichtung zur Erzeugung von Polyethylen vorzuschlagen.

Diese Aufgabe wird gelöst mit einem Verfahren aufweisend die Merkmale von Anspruch 1. Die Unteransprüche 2 bis 6 betreffen weitere, vorteilhafte Verfahrensschritte. Die Aufgabe wird weiter gelöst mit einer Vorrichtung aufweisend die Merkmale von Anspruch 7. Die Unteransprüche 8 bis 11 betreffen weitere vorteilhafte Ausgestaltungen.

Die Aufgabe wird insbesondere gelöst mit einem Verfahren zur Rückgewinnung von Stickstoff bei der Herstellung von Polyethylen,
- indem in einer Stripping-Kolonne das nicht polymerisierte Ethylen unter Verwendung von Stickstoff vom Polyethylen getrennt wird,
- indem ein Gasgemisch umfassend Ethylen und Stickstoff von der Stripping-Kolonne abgezogen und einer Membran zugeführt wird, welche derart ausgestaltet ist, dass das Ethylen zumindest teilweise vom Stickstoff abtrennt wird,
- indem der mit Ethylen abgereicherte Stickstoff gefiltert und danach zurückgewonnen wird,
- und indem das Ethylen mit einem Vakuumpumpsystem von der Membran abgezogen wird.

Die Aufgabe wird zudem insbesondere gelöst mit einer Vorrichtung zur Rückgewinnung von Stickstoff bei der Herstellung von Polyethylen, umfassend
- einen Kompressor der Fluid leitend mit einer Stripping-Kolonne verbindbar ist,
- eine Membranvorrichtung welche derart ausgestaltet ist, dass diese aus einem Ethylen und Stickstoff umfassenden Gasgemisch den Stickstoff zumindest teilweise vom Ethylen abzutrennen erlaubt,
- eine Filtervorrichtung
- sowie ein Vakuumpumpsystem
- wobei die Membranvorrichtung Fluid leitend mit der Kompressor verbunden ist, und wobei die Membranvorrichtung einerseits mit der Filtervorrichtung und andererseits mit dem Vakuumpumpsystem Fluid leitend verbunden ist, und wobei der zurückgewonnene Stickstoff nach der Filtervorrichtung zur Verfügung steht.

In einem bevorzugten Verfahrensschritt wird der zurückgewonnene Stickstoff wieder der Stripping-Kolonne zugeführt. Das erfindungsgemässe Verfahren weist somit den Vorteil auf, dass der Stickstoff (N₂) wieder verwertbar ist, wodurch die Herstellung von Polyethylen kostengünstiger wird.

In einem weiteren, bevorzugten Verfahrensschritt wird das zurückgewonnene Ethylen wieder dem Reaktor, in welchem die Polymerisation abläuft, zugeführt. Das erfindungsgemässe Verfahren weist somit den Vorteil auf, dass das Ethlen wieder verwertbar ist.

Das erfindungsgemässe Verfahren bzw. die Vorrichtung weisen somit den Vorteil auf, dass das Ethylen und/oder der Stickstoff mit einem derart hohen Reinheitsgrad gewonnen werden können, dass eine Wiederverwendung des Stickstoffs als Strippingmedium in der Stripping-Kolonne und ein Wiedereinsatz des Ethylens als Ausgangsprodukt im Reaktor möglich ist.

In der Stripping-Kolonne wird das abgetrennte Ethylen zusammen mit dem Stickstoff, und gegebenenfalls noch mit weiteren Kohlenwasserstoffen, Polyethylenstaub und Kathalysatoranteilen, als Fluid bzw. Gasgemisch abgezogen, danach durch den Kompressor verdichtet, und danach einer Membran zugeführt. Zum Verdichten wird vorzugsweise ein Flüssigkeitsringkompressor verwendet, welcher vorzugsweise mit Wasser betrieben wird, und welcher das Fluid auf einen Druck von beispielsweise 10 bar bis 15 bar verdichtet. Ein derartiger Flüssigkeitsringkompressor verdichtet das Gasgemisch nahezu isotherm, was den Vorteil aufweist, dass die Temperatur des Gasgemisches auf Grund der Kompression nicht erhöht wird. Würde bei der Kompression eine wesentliche Temperaturerhöhung auftreten, so besteht die Gefahr, dass das im Gasgemisch enthaltene Etylen polymerisiert. Ein Flüssigkeitsringkompressor weist zudem den Vorteil auf, dass sowohl feste Anteile wie Polyethylenstaub als auch flüssige Anteile wie der Kathalysator, welche aus der Stripping-Kolonne mitgerissen werden, mit dem Wassersystem des Flüssigkeitsringkompressors ausgeschleust werden können. Im Flüssigkeitsringkompressor erfolgt somit ein Waschen des geförderten Fluides, wobei insbesondere der im Fluid enthaltene Polyethylenstaub ausgewaschen wird, im Wasser verbleibt, und beispielsweise im einem Dekanter abgezogen werden kann. Ein Flüssigkeitsringkompressor weist zudem den Vorteil auf, dass die Kathalysatoranteile durch das Wasser ausgewaschen werden. Bei der Herstellung von Polyethylen wird als Kathalysator häufig Hexan verwendet, ein Krebs erzeugendes Mittel. Dieses Hexan kann somit der Stripping-Kolonne zumindest teilweise entzogen werden.

Das verdichtete Ethylen -Kohlenwasserstoffgas-Stickstoffgemisch, das sich im Flüssigkeitsringkompressor mit Wasserdampf sättigt, wird einer organophilen Membranfläche zugeführt, welche das Ethylen und die Kohlenwasserstoffe als Permeat passieren lässt, wogegen Wasserdampf und Stickstoff als Retentat zurückgehalten wird. In einer bevorzugten Ausführungsform wird der Stickstoff zusammen mit dem Wasserdampf der Stripping-Kolonne wieder zugeführt. Der Stripping-Vorgang erfolgt mit dem Stickstoff/Wasserdampfgemisch, wobei das zurückgeführte Stickstoff/Wasserdampfgemisch nach der Membran vorzugsweise durch einen Aktivkohlefilter geleitet wird, um den Rest des krebserzeugenden Hexans auf eine vertretbare Konzentration zu reduzieren. Ein Vorteil ist somit die Tatsache, dass der allgemeine Stickstoffverbrauch auf ein Minimum reduziert wird.

Der durch den Kompressor bewirkte, relativ hohe Druck von beispielsweise 10 bis 15 bar weist den Vorteil auf, dass die nachfolgend angeordnete Membran eine kleine Fläche aufweisen kann, und dass die Membran eine höhere Permeabilität aufweist, sodass die Membranvorrichtung relativ klein ausgestaltet sein kann. Trotz des hohen Druckes tritt am Flüssigkeitsringkompressor keine Polymerisation auf, da die Kompression im wesentlichen isotherm erfolgt. Das in der erfindungsgemässen Vorrichtung geförderte Fluid muss weder stark erwärmt noch stark abgekühlt werden, sodass das geförderte Fluid weder eine besonders hohe noch eine besonders tiefe Temperatur aufweisen. Insbesondere tritt auch keine Verflüssigung von Bestandteilen des Fluides auf. Dieser Aspekt ist insbesondere für die Lebensdauer der Membran von Wichtigkeit, da die Membran an sich temperaturempfindlich ist. Ein weiterer Vorteil der erfindungsgemässen Vorrichtung ist die Tatsache, dass auf Grund des in der Anlage vorherrschenden, relativ hohen Drucks, die Anlage sehr klein und kompakt ausgestaltet und dimensioniert werden kann.

Das Vakuumpumpsystem und der Kompressor umfassen vorzugsweise einen Flüssigkeitsringkompressor, wie dieser beispielsweise in der Druckschrift EP 0 967 393 A2 offenbart ist.

Die Erfindung wird nachfolgend an Hand von Ausführungsbeispielen beschrieben.
- Fig. 1: zeigt schematisch eine Vorrichtung zur Rückgewinnung von Stickstoff bei der Herstellung von Polyethlyen;
- Fig. 2: zeigt schematisch eine weitere Vorrichtung zur Rückgewinnung von Stickstoff bei der Herstellung von Polyethylen.

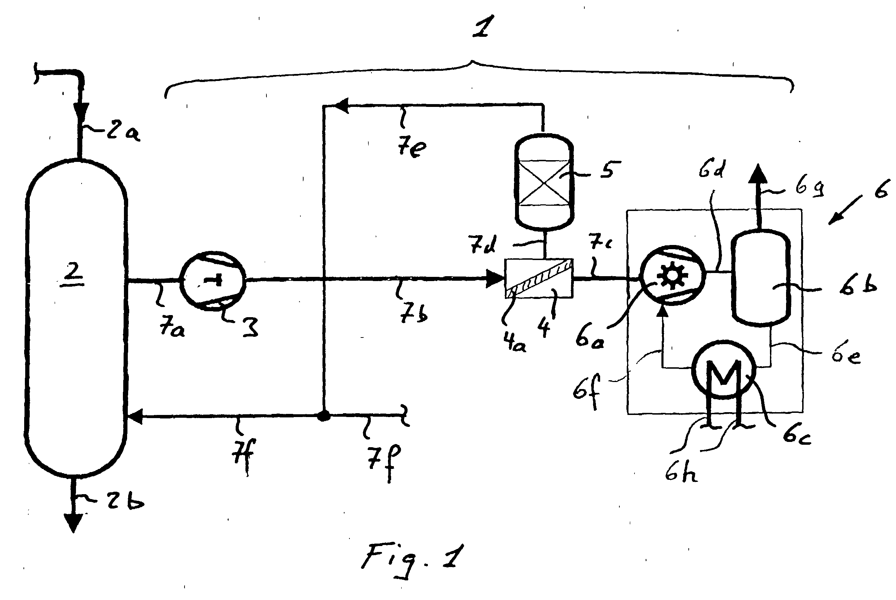

Fig. 1 zeigt eine erste Vorrichtung zur Rückgewinnung von Stickstoff. In einem nicht dargestellten Reaktor wird das Ethylen zu rohem Polyethylen polymerisiert. Dem Reaktor nachfolgend ist eine Stripping-Kolonne 2 angeordnet, welche über die Zuleitung 2a Fluid leitend mit dem Reaktor verbunden ist. Innerhalb der Stripping-Kolonne 2 wird das rohe Polyethylen mit einem an sich bekannten Verfahren gereinigt, indem dem rohen Polyethylen unter Verwendung von Stickstoff die nicht reagierten Kohlenwasserstoffe entzogen werden. Das derart gereinigte Polyethylen wird über die Ableitung 2b einer weiteren Verarbeitung zugeführt.

Die Stripping-Kolonne 2 ist Fluid leitend mit einer Stickstoffrückgewinnungsvorrichtung 1 verbunden. Eine Membranvorrichtung 4 mit Membran 4a ist über eine Zuleitung 7b, einen ölfreien Kompressor 3 und eine Zuleitung 7a Fluid leitend mit der Stripping-Kolonne 2 verbunden. Der Kompressor 3 ist beispielsweise als Labyrinth-Kolbenkompressor ausgestaltet. Der Membranvorrichtung 4 ist über eine Verbindungsleitung 7d ein Filter 5 nachgeordnet, wobei das Filter 5 über die Verbindungsleitungen 7e, 7f Fluid leitend mit der Stripping-Kolonne 2 verbunden ist. Die Membranvorrichtung 4 ist über die Verbindungsleitung 7c zudem mit einem Vakuumpumpsystem 6 verbunden. Das Vakuumpumpsystem 6 umfasst eine Flüssigkeitsringpumpe 6a, welche, unter Ausbildung eines Flüssigkeitskreislaufes, über die Verbindungsleitungen 6d, 6e, 6f Fluid leitend mit einem Separator 6b, auch als Gas-Flüssigkeitsabscheider bezeichnet, sowie einem Kühler 6c mit Kühlleiter 6h verbunden ist. Die Flüssigkeitsringpumpe 6a ist derart angeordnet, dass sie bezüglich der Membranvorrichtung 4 ein Vakuum erzeugt. Nebst anderen Flüssigkeiten ist zur Verwendung im Flüssigkeitskreislauf insbesondere Wasser geeignet. Im Separator 6b werden die flüssigen und gasförmigen Bestandteile getrennt, wobei die gasförmigen Anteile über die Ableitung 6g abgeführt werden, beispielsweise an einen Flare. Im dargestellten Ausführungsbeispiel wird in der Stripping-Kolonne 2 zwischen 700 und 1500 kg Stickstoff (N₂) pro Stunde umgesetzt.

Das Gasgemisch umfassend Ethylen und Stickstoff wird mit Hilfe des Kompressors 3 aus der Stripping-Kolonne 2 abgezogen und der Membranvorrichtung 4 zugeführt. Die Membran 4a hat die Eigenschaft, dass sie für Kohlenwasserstoffe wesentlich durchlässiger ist als für Stickstoff. Die Kohlenwasserstoffe, insbesondere das Ethylen, wird über die Verbindungsleitung 7c abgesaugt, wogegen der mit Ethylen abgereicherte Stickstoff im Filter 5 mit Aktivekohle gefiltert wird, und danach gereinigt der Stripping-Kolonne 2 zugeführt wird. Der derart gereinigte Stickstoff kann beispielsweise eine Reinheit von 99,5% aufweisen. Die Membran 4a kann beispielsweise aus einem Mehrschichtverbundwerkstoff bestehen, im Englischen auch als "Multilayer Composite Membrane" bezeichnet. Eine derartige Dünnfilm-Membran weist beispielsweise eine 10 bis 100 mal höhere Permeabilität für Kohlenwasserstoffe im Vergleich zu Stickstoff auf.

Das von der Membranvorrichtung 4 mit Hilfe der Flüssigkeitsringpumpe 6a abgezogene Ethylen wird im Separator 6b von der Flüssigkeit getrennt und der Ableitung 6g zugeführt. Das derart abgezogene Ethylen kann verbrannt werden, oder einer nachfolgenden Verarbeitung zugeführt werden. Das abgezogene Ethylen kann auch wieder zur Herstellung von Polyethylen verwendet werden, indem das Polyethylen beispielsweise dem Reaktor zugeführt wird.

Über die Verbindungsleitung 7f kann zusätzlicher Stickstoff zugeführt werden, um den im Rückgewinnungsverfahren auftretenden Verlust zu kompensieren.

Die erfindungsgemässe Stickstoffrückgewinnungsvorrichtung ermöglicht Polyethylen kostengünstig herzustellen. Der Verlust an Ethylen wird reduziert. Zudem wird die Umweltbelastung sowie der Energieverbrauch zur Herstellung von Ethylen reduziert.

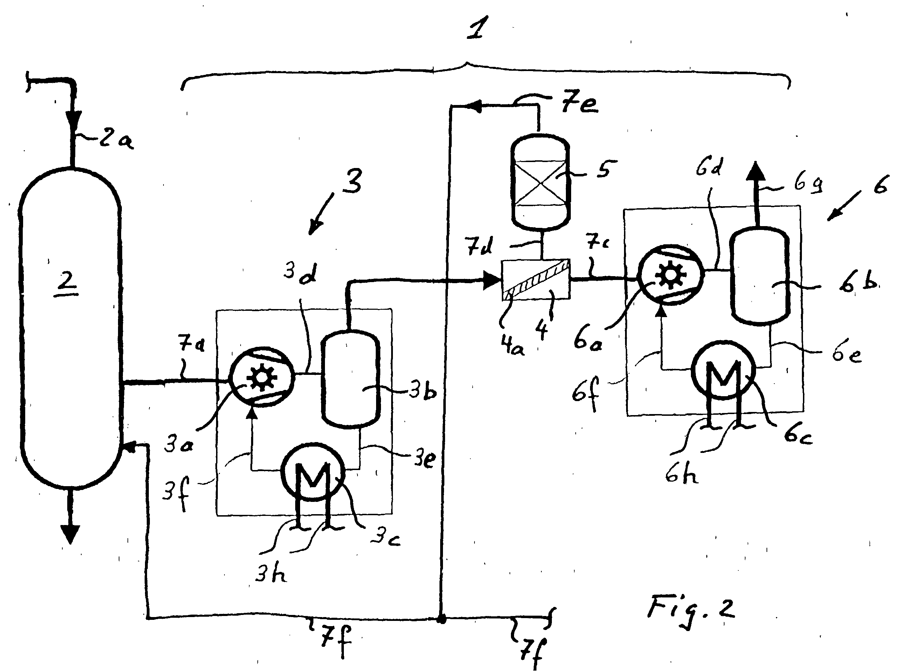

Im Unterschied zu dem in Fig. 1 dargestellten Ausführungsbeispiel ist der in Fig. 2 dargestellte Kompressor 3 als ein Flüssigkeitsringkompressorsystem 3 ausgestaltet, mit einem Flüssigkeitsringkompressor 3a, einem Separator 3b und einem Kühler 3c, wobei die drei letztgenannten Komponenten über Verbindungsleitungen 3d, 3e, 3f, und unter Ausbildung eines Kreislaufes, Fluid leitend verbunden sind. Der Kühler 3c ist zudem mit einer Kühlleitung 3h verbunden. In diesem Kreislauf wird als Förderflüssigkeit vorzugsweise Wasser verwendet.
Das in Fig. 2 dargestellte Ausführungsbeispiel weist den Vorteil auf, dass das aus der Stripping-Kolonne 2 über die Verbindungsleitung 7a abgezogene Fluid isotherm oder nahezu isotherm komprimiert wird. Zudem wird das abgezogene Fluid im Flüssigkeitsringkompressor 3a gewaschen.

## Patentansprüche

1. Verfahren zur Rückgewinnung von Stickstoff bei der Herstellung von Polyethylen,
- indem in einer Stripping-Kolonne (2) das nicht polymerisierte Ethylen unter Verwendung von Stickstoff vom Polyethylen getrennt wird,
- indem ein Gasgemisch umfassend Ethylen und Stickstoff von der Stripping-Kolonne (2) abgezogen und einer Membran (4a) zugeführt wird, welche derart ausgestaltet ist, dass das Ethylen zumindest teilweise vom Stickstoff abtrennt wird,
- indem der mit Ethylen abgereicherte Stickstoff gefiltert und danach zurückgewonnen wird,
- und indem das Ethylen mit einem Vakuumpumpsystem (6) von der Membran (4a) abgezogen wird.

2. Verfahren nach Anspruch 1, **dadurch gekennzeichnet, dass** der von Ethylen abgereicherte Stickstoff mit Aktivkohle gefiltert wird.

3. Verfahren nach einem der vorhergehenden Ansprüche, **dadurch gekennzeichnet, dass** der zurückgewonnene Stickstoff wieder der Stripping-Kolonne (2) zugeführt wird.

4. Verfahren nach einem der vorhergehenden Ansprüche, **dadurch gekennzeichnet, dass** das abgezogene Ethylen verbrannt wird.

5. Verfahren nach einem der Ansprüche 1 bis 3, **dadurch gekennzeichnet, dass** das abgezogene Ethylen wieder einem Reaktor zur Herstellung von Polyethylen zugeführt wird.

6. Verfahren nach einem der vorhergehenden Ansprüche, **dadurch gekennzeichnet, dass** im Vakuumpumpsystem (6) eine Flüssigkeitsringvakuumpumpe angeordnet ist, mit welcher das Ethylen von der Membran abgezogen wird.

7. Vorrichtung (1) zur Rückgewinnung von Stickstoff bei der Herstellung von Polyethylen, umfassend
- einen Kompressor (3) der Fluid leitend mit einer Stripping-Kolonne (2) verbindbar ist,
- eine Membranvorrichtung (4) welche derart ausgestaltet ist, dass diese aus einem Ethylen und Stickstoff umfassenden Gasgemisch den Stickstoff zumindest teilweise vom Ethylen abzutrennen erlaubt,
- eine Filtervorrichtung (5)
- sowie ein Vakuumpumpsystem (6)
- wobei die Membranvorrichtung (4) Fluid leitend mit der Kompressor (3) verbunden ist, und wobei die Membranvorrichtung (4) einerseits mit der Filtervorrichtung (5) und andererseits mit dem Vakuumpumpsystem (6) Fluid leitend verbunden ist, und wobei der zurückgewonnene Stickstoff nach der Filtervorrichtung (5) zur Verfügung steht.

8. Vorrichtung nach Anspruch 7, **dadurch gekennzeichnet, dass** der Ausgang der Filtervorrichtung (5) Fluid leitend mit der Stripping-Kolonne (2) verbindbar ist.

9. Vorrichtung nach Anspruch 7 oder 8, **dadurch gekennzeichnet, dass** das Vakuumpumpsystem (6) eine Flüssigkeitsringvakuumpumpe (6a) umfasst.

10. Vorrichtung nach einem der Ansprüche 7 bis 9, **dadurch gekennzeichnet, dass** das Vakuumpumpsystem (6) einen Auslass (6g) aufweist, welcher Fluid leitend mit einem Flare oder einem Reaktor zur Herstellung von Polyethylen verbindbar ist.

11. Vorrichtung nach einem der Ansprüche 7 bis 10, **dadurch gekennzeichnet, dass** der Kompressor (3) als ein Flüssigkeitsringkompressorsystem (3) umfassend einen Flüssigkeitsringkompressor (3a) ausgestaltet ist.
